# EUROPÄISCHE PATENTSCHRIFT

(11) **EP 2 368 813 B1**
(45) Veröffentlichungstag und Bekanntmachung des Hinweises auf die Patenterteilung: **20.03.2013**
(21) Anmeldenummer: 11002492.4
(22) Anmeldetag: 25.03.2011
(51) Int. Cl.: B65F 1/10

(54) **Einwurfschacht für eine unterirdische Sammeleinrichtung für Abfälle**
Insertion chute for a subterranean waste collection device
Goulotte d'introduction pour un dispositif souterrain de collecte des déchets

(30) Priorität: 25.03.2010 CH 4402010
(43) Veröffentlichungstag der Anmeldung: 28.09.2011
(73) Patentinhaber: Villiger Entsorgungssysteme AG, 5647 Oberrüti (CH)
(72) Erfinder: Villiger, Paul, 5647 Oberrüti (CH)
(74) Vertreter: Spierenburg, Pieter

(56) Entgegenhaltungen:
- EP-A1- 1 671 899

## Beschreibung

Die Erfindung betrifft einen Einwurfschacht für eine unterirdische Sammeleinrichtung für Abfälle nach dem Oberbegriff des Anspruchs 1.

### STAND DER TECHNIK

Ein solcher Einwurfschacht für eine unterirdische Sammeleinrichtung mit Untergrund-Containern ist allgemein bekannt, beispielsweise die Einwurfsäule vom Typ "Lugano" der Firma Villiger Entsorgungssysteme AG, CH-5647 Oberrüti, welche eine halbgeschlossene Verschalung aufweist, welche einen rechteckigen Querschnitt aufweist und nach oben in der Form einer Ellipse geschlossen ist. Diese hüllenartige Verschalung ist an der Bodenplatte mit Schrauben befestigt und kann nach oben von der Trägerkonstruktion für Servicezwecke abgehoben werden. Um die Verschalung wegzunehmen, braucht es in der Regel zwei Personen, welche gleichzeitig die Verschalung hochheben müssen. Das Gleiche gilt, wenn die Verschalung wieder auf die Bodenplatte aufgesetzt werden soll.

Aus der EP-A-1 671 899 ist ein ähnlicher Einwurfschacht bekannt.

### AUFGABE DER ERFINDUNG

Der vorliegenden Erfindung liegt nun die Aufgabe zugrunde, einen Einwurfschacht für eine unterirdische Sammeleinrichtung anzugeben, bei welchem die Servicearbeiten einfacher und schneller ausgeführt werden können.

### GEGENSTAND DER ERFINDUNG

Diese Aufgabe wird durch einen Einwurfschacht mit den Merkmalen des Anspruchs 1 gelöst.

Der erfindungsgemässe Einwurfschacht hat den grossen Vorteil, dass nunmehr die Servicearbeiten von einer einzigen Person sehr rationell durchgeführt werden können. Auch wenn die Einwurfklappe durch Unrat verklemmen würde, kann eine Halbschale schnell gekippt und den Mangel behoben werden, womit eine dauerhafte Funktionsfähigkeit des Einwurfschachts gewährleistet kann.

### BESCHREIBUNG EINES AUSFÜHRUNGSBEISPIELES DER ERFINDUNG

Weitere Vorteile der Erfindung ergeben sich aus den abhängigen Ansprüchen und aus der nachfolgenden Beschreibung, in welcher die Erfindung anhand eines in den schematischen Zeichnungen dargestellten Ausführungsbeispieles näher erläutert wird. Es zeigt:
- Fig. 1: einen Einwurfschacht für eine unterirdische Sammeleinrichtung mit geöffneter Einfüllklappe in perspektivischer Darstellung,
- Fig. 2: denselben Einwurfschacht der Figur 1 von hinten gesehen mit geöffneter Servicetüre,
- Fig. 3: denselben Einwurfschacht der Figur 1 mit einem halb geöffneten Halbschale,
- Fig. 4: den Einwurfschacht der Figur 1 mit voll geöffneten Halbschalen,
- Fig. 5: den Einwurfschacht der Figur 1 in geschlossenem Zustand,
- Fig. 6: eine detaillierte perspektivische Darstellung des Verschlusses zwischen der Halbschale und der Bodenplatte , und
- Fig. 7: den Einwurfschacht der Figur 1 mit einer bis zu einem Anschlag geöffneten Halbschale.

In den Figuren sind für dieselben Elemente jeweils dieselben Bezugszeichen verwendet, wenn nicht anders angegeben.

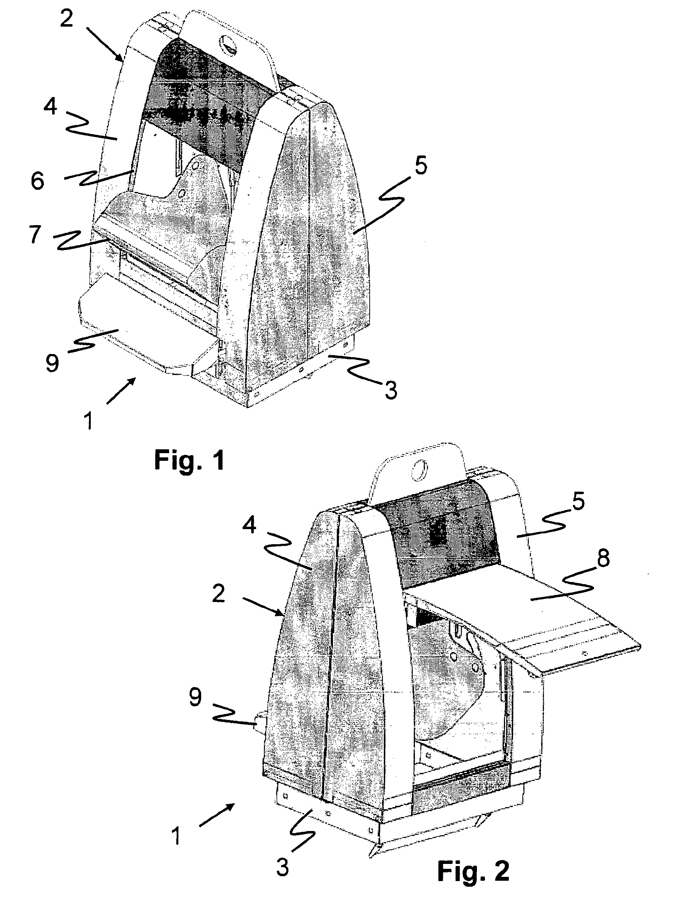

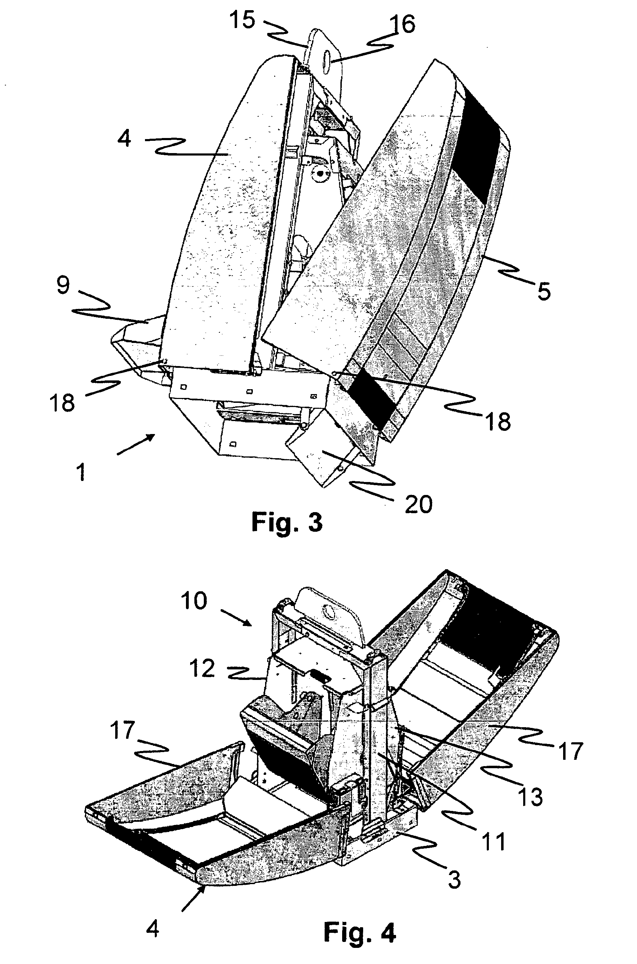

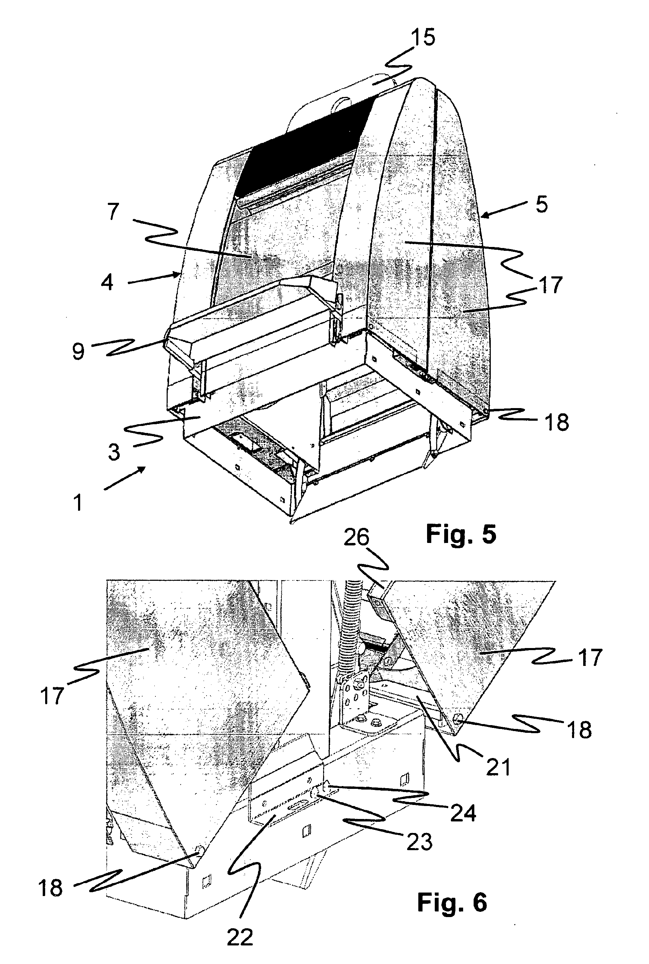

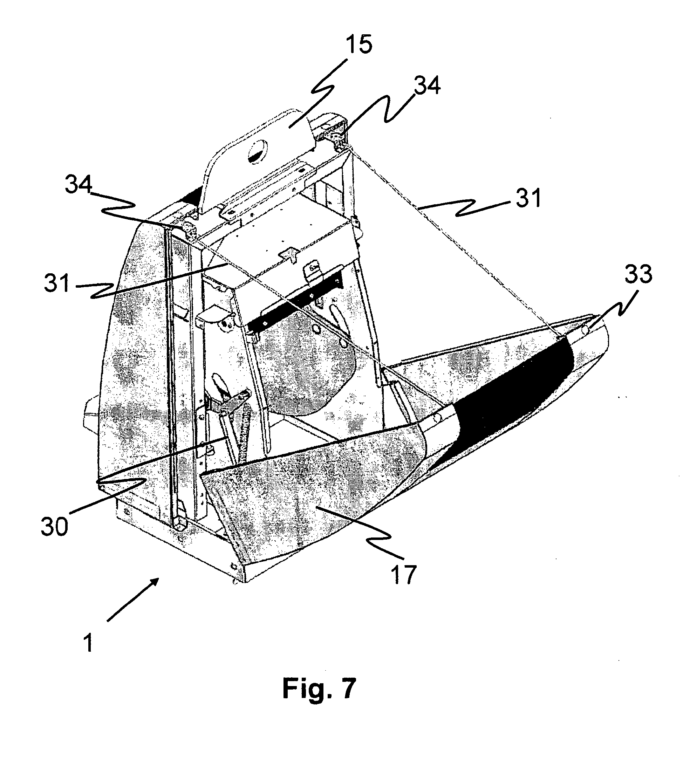

In den Figuren 1 und 2 ist ein Einwurfschacht 1 mit einer Verschalung 2 auf einer Bodenplatte 3 gezeigt. Die Verschalung 2 weist einen rechteckigen Querschnitt auf und ist nach oben hin verjüngt. Die Verschalung 2 besteht aus zwei gegeneinander schwenkbar gelagerten Halbschalen 4 und 5, wobei die erste Halbschale 4 eine Öffnung 6 für eine Einfüllklappe 7 und die zweite Halbschale 5 eine Servicetüre 8 aufweist. Unterhalb der Einfüllklappe 7 ist ein Fusspedal 9 vorgesehen, mit welchem die Einfüllklappe 7 bis zu einem Anschlag geöffnet werden kann. In den Figuren 3 und 4 ist eine Tragkonstruktion 10 ersichtlich, welche auf der Bodenplatte 3 befestigt ist. Diese Tragkonstruktion 10 besteht aus einem U-förmigen Tragrahmen 11, an welcher auf beiden Seiten eine Abdeckplatte 12 und 13 befestigt ist. An dem Tragrahmen 11 ist oben eine Stahlplatte 15 mit einem Loch 16 angeschweisst, um den Einwurfschacht 1 mittels eines - hier nicht dargestellten - Krans anheben zu können. Die beiden Halbschalen 4 und 5 weisen auf beiden Seiten Wangen 17 mit einem Scharnier 18 auf, wodurch die Halbschalen 4 und 5 schwenkbar sind. Figur 5 zeigt den Einwurfschacht 1 von unten, so dass eine Begrenzungsplatte 20 zu sehen ist, welche mit einem Hebelmechanismus 30 (siehe Figur 7) beim Öffnen der Einfüllklappe 7 angehoben wird, so dass die Einfüllöffnung nach unten geschlossen ist und somit nur eine bestimmte Menge Abfall (einen Abfallsack einer bestimmten Grösse) hineingestellt werden kann.

Figur 6 zeigt Details des geöffneten Einwurfschachts 1 mit den Halbschalen 4 und 5. Die Scharniere sind von Bolzen 18 gebildet, welche in einen vorstehenden, an der Bodenplatte 3 befestigten Holmen 21 eingeschraubt sind. Ferner ist ein Winkelstück 22 mit zwei vorstehenden, konisch ausgebildeten Stiften 23 und 24 an der Bodenplatte 3 befestigt. Über die gesamte freie Länge der Wangen 17 ist ein Vierkantrohr 26 angeschweisst, welches als Aufnahmeteil beim Schliessen der Halbschalen 4 und 5 mit den Stiften 23 und 24 einen Verschluss bildet. Die Stifte 23 und 24 sind so angeordnet, dass die Wangen 17 der geschlossenen Halbschalen 3 und 4 bündig zueinander sind, d.h. eine glatte Fläche bilden.

Figur 7 zeigt ferner zwei Drahtseile 31, welche einerseits mit dem Tragrahmen 11 und andererseits mit der Halbschale 5 verbunden sind, so dass die Halbschale 5 nicht ganz nach aussen fallen kann, wenn sie geöffnet wird. Für die Halbschale 4 sind ebensolche Drahtseile vorgesehen. Diese Drahtseile 31 dienen somit als Anschlag, um den Öffnungswinkel der Halbschalen 4 und 5 zu beschränken. Die Oberseite der Halbschalen 4 und 5 weisen zwei Bohrungen 33 und der Tragrahmen 11 weist oben zwei Winkelstücke 34 mit einer Gewindebohrung auf, so dass die Halbschalen 4 und 5 im geschlossenen Zustand an den Tragrahmen 11 verschraubt sind und nicht von unbefugten Personen geöffnet werden kann. Der hier gezeigte Hebelmechanismus 30 ist mit einer Untersetzung ausgebildet, so dass die Begrenzungsplatte 20 einen geringeren Drehbereich aufweist als die Einfüllklappe 7, wenn sie vollständig geöffnet ist.

Anstelle einer Einfüllklappe 7 kann auch eine feste Einwurföffnung vorgesehen sein. Ebenfalls kann die Servicetüre 8 statt schwenkbar mittels Querbolzen und einem oberen Falz eingehängt sein, wobei unten ein Schloss vorgesehen ist, um diese Servicetüre durch Aushängen wegzunehmen.

## Patentansprüche

1. Einwurfschacht (1) für eine unterirdische Sammeleinrichtung für Abfälle mit einer Bodenplatte (3), einer Verschalung (2) und einer Einwurföffnung für den Einwurf von Müllsäcken, Glasflaschen und dergleichen, **dadurch gekennzeichnet, dass** die Verschalung (2) zweiteilig mit zwei Halbschalen (4, 5) ausgebildet ist, wobei die beiden Halbschalen (4, 5) um ein Scharnier (18) schwenkbar an der Bodenplatte (3) befestigt sind.

2. Einwurfschacht nach Anspruch 1, **dadurch gekennzeichnet, dass** die Halbschalen (4, 5) seitliche Wangen (17) aufweisen und zwischen dem freien Endbereich der Wange (17) und der Bodenplatte (3) ein Verschluss vorgesehen ist.

3. Einwurfschacht nach Anspruch 2, **dadurch gekennzeichnet, dass** der Verschluss aus mindestens einem konischen Stift (23, 24) und mit diesem zusammenwirkenden Aufnahmeteil (26) besteht.

4. Einwurfschacht nach einem der Ansprüche 1 bis 3, **dadurch gekennzeichnet, dass** die Einwurföffnung mit einer um eine Achse, durch eine Öffnungsvorrichtung schwenkbaren Einfüllklappe (7) versehen ist.

5. Einwurfschacht nach Anspruch 4, **dadurch gekennzeichnet, dass** die eine Halbschale (4) eine Öffnung (6) für die Einfüllklappe (7) aufweist und die andere Halbschale (5) eine schwenkbare Servicetüre (8) aufweist.

6. Einwurfschacht nach einem der Ansprüche 1 bis 5, **dadurch gekennzeichnet, dass** der Öffnungswinkel der Halbschalen (4, 5) durch einen Anschlag (31) beschränkt ist.

7. Einwurfschacht nach einem der Ansprüche 1 bis 6, **dadurch gekennzeichnet, dass** eine Begrenzungsplatte (20) zur schwenkbaren Einfüllklappe (7) vorgesehen ist, die dazu dient um die Grösse der einzuwerfenden Müllsäcke zu begrenzen, wobei die Begrenzungsplatte (20) um eine weitere Achse drehbar ist, und die Begrenzungsplatte (20) mittels eines Hebelmechanismus (30) mit der Öffnungsvorrichtung für die schwenkbare Einfüllklappe (7) in Wirkverbindung steht.

8. Einwurfschacht nach Anspruch 7, **dadurch gekennzeichnet, dass** der Hebelmechanismus (30) mit einer Untersetzung ausgebildet ist, so dass die Begrenzungsplatte (20) einen geringeren Drehbereich aufweist als die Einfüllklappe im vollständig geöffneten Zustand.

## Claims

1. An insertion chute (1) for a subterranean waste collection device, comprising a base plate (3), a casing (2) and an insertion opening for inserting garbage bags, glass bottles and the like, **characterized in that** the casing (2) is arranged in two parts with two half-shells (4, 5), with the two half-shells (4, 5) being swivellably fixed about a hinge (18) to the base plate (3).

2. An insertion chute according to claim 1, **characterized in that** the half-shells (4, 5) have lateral cheeks (17) and a closure is provided between the free end region of the cheek (17) and the base plate (3).

3. An insertion chute according to claim 2, **characterized in that** the closure consists of at least one conical pin (23, 24) and a receiving part (26) cooperating with said pin.

4. An insertion chute according to one of the claims 1 to 3, **characterized in that** the insertion opening is provided with a filling flap (7) which is swivellable about an axis by an opening apparatus.

5. An insertion chute according to claim 4, **characterized in that** the one half-shell (4) comprises an opening (6) for the filling flap (7) and the other half-shell (5) comprises a swivellable maintenance door (8).

6. An insertion chute according to one of the claims 1 to 5, **characterized in that** the opening angle of the half-shells (4, 5) is limited by a stop (31).

7. An insertion chute according to one of the claims 1 to 6, **characterized in that** a limitation plate (20) to the swivellable filling flap (7) is provided, which is used for limiting the size of the garbage bags to be inserted, with the limitation plate (20) being rotatable about a further axis, and the limitation plate (20) is in operative connection by means of a lever mechanism (30) with the opening apparatus for the swivelling filling flap (7).

8. An insertion chute according to claim 7, **characterized in that** the lever mechanism (30) is provided with a reduction gearing, so that the limitation plate (20) has a smaller rotational range than the filling flap in the fully opened state.

## Revendications

1. Gaine d'introduction (1) pour un dispositif souterrain de collecte de déchets avec une plaque de fond (3), un coffrage (2) et une ouverture d'insertion pour l'insertion de sacs de déchets, de bouteilles en verre et similaires, **caractérisée en ce que** le coffrage (2) est construit en deux parties avec deux demi-coffrages (4, 5), les deux demi-coffrages (4, 5) étant fixés à la plaque de fond (3) avec la possibilité de pivoter autour d'une charnière (18).

2. Gaine d'introduction selon la revendication 1, **caractérisée en ce que** les demi-coffrages (4, 5) présentent des flasques latéraux (17) et une fermeture est prévue entre la partie d'extrémité libre du flasque (17) et la plaque de fond (3).

3. Gaine d'introduction selon la revendication 2, **caractérisée en ce que** la fermeture se compose d'au moins une goupille conique (23, 24) et d'un réceptacle (26) coopérant avec celle-ci.

4. Gaine d'introduction selon l'une des revendications 1 à 3, **caractérisée en ce que** l'ouverture d'introduction est munie d'un volet de remplissage (7) pouvant être basculé autour d'un axe par un dispositif d'ouverture.

5. Gaine d'introduction selon la revendication 4, **caractérisée en ce qu'**un demi-coffrage (4) présente une ouverture (6) pour le volet de remplissage (7) et l'autre demi-coffrage (5) une trappe de visite (8) pivotante.

6. Gaine d'introduction selon l'une des revendications 1 à 5, **caractérisée en ce que** l'angle d'ouverture des demi-coffrages (4, 5) est limité par une butée (31).

7. Gaine d'introduction selon l'une des revendications 1 à 6, **caractérisée en ce qu'**il est prévu une plaque de limitation (20) par rapport à la trappe de remplissage (7) pivotante, qui sert à limiter la taille des sacs de déchets introduits, la plaque de limitation (20) pouvant tourner autour d'un autre axe et la plaque de limitation (20) étant en liaison active au moyen d'un mécanisme de levier (30) avec le dispositif d'ouverture du volet de remplissage (7) pivotant.

8. Gaine d'introduction selon la revendication 7, **caractérisée en ce que** le mécanisme de levier (30) est réalisé avec une démultiplication, de sorte que la plaque de limitation (20) présente une plage de rotation inférieure à celle du volet de remplissage dans l'état complètement ouvert.
